# EUROPÄISCHE PATENTSCHRIFT

(11) **EP 1 324 815 B1**
(45) Veröffentlichungstag und Bekanntmachung des Hinweises auf die Patenterteilung: **26.05.2004**
(21) Anmeldenummer: 01969073.4
(22) Anmeldetag: 26.09.2001
(51) Int. Cl.: B01D 53/22, C01B 21/04

(54) **VORRICHTUNG UND VERFAHREN ZUR GASPERMEATION**
GAS PERMEATION DEVICE AND METHOD
DISPOSITIF ET PROCEDE POUR LA PERMEATION DE GAZ

(30) Priorität: 26.09.2000 AT 16252000
(43) Veröffentlichungstag der Anmeldung: 09.07.2003
(73) Patentinhaber: Axiom Angewandte Prozesstechnik Ges.M.B.H., 1010 Wien (AT)
(72) Erfinder: HARASEK, Michael, A-1100 Wien (AT); SZIVACZ, Johannes, A-2484 Weigelsdorf (AT)
(74) Vertreter: Pawloy, Peter Michael, Dipl.-Ing.
(86) Internationale Anmeldenummer: PCT/AT2001/000304
(87) Internationale Veröffentlichungsnummer: WO 2002/026359

(56) Entgegenhaltungen:
- US-A- 5 496 388
- US-A- 5 855 646
- PATENT ABSTRACTS OF JAPAN vol. 013, no. 061 (C-567), 10. Februar 1989 (1989-02-10) & JP 63 252907 A (TORAY IND INC), 20. Oktober 1988 (1988-10-20)
- PATENT ABSTRACTS OF JAPAN vol. 016, no. 407 (P-1411), 27. August 1992 (1992-08-27) & JP 04 136753 A (TEIJIN LTD), 11. Mai 1992 (1992-05-11)

## Beschreibung

Die Erfindung betrifft eine Vorrichtung zur Gaspermeation mit mindestens einer, einer drehzahlregelbaren Verdichtereinheit als Druckquelle nachgeschalteten, zur Gaspermeation vorgesehenen Membraneinheit mit einer Gas-Eingangsleitung und einer Produktgas-Ausgangsleitung.

Weiters betrifft die Erfindung auch ein Verfahren zur Steuerung bzw. Regelung einer Gaspermeation mit mindestens einer einer Druckquelle nachgeschalteten zur Gaspermeation vorgesehenen Membraneinheit.

Üblicherweise werden Gaspermeationsanlagen, insbesondere zur N₂-Produktion mit Kompressoren bzw. Verdichtern mit einer konstanten Leistung betrieben. Die von dem Verdichter gelieferte Gasmenge ist somit von seinem Ansaugzustand (Druck, Temperatur) abhängig. Da insbesondere bei der Verwendung des Stickstoffes zum Explosionsschutz eine im Wesentlichen konstante N₂-Konzentration eingehalten werden muss, wird bei bekannten Gaspermeationsanlagen nach der Gaspermeation ein einstellbares Entnahmeventil vorgesehen. Hierdurch ergibt sich eine zeitlich nicht konstante N₂-Produktionsleistung, die von dem Druck und der Temperatur der Umgebung sowie von Alterungserscheinungen der zur Gaspermeation vorgesehenen Membran abhängig ist.

Um sicherzustellen, dass die geforderte Gaszusammensetzung nicht unterschritten werden kann, wird üblicherweise die Membrananlage bzw. die Leistung des Kompressors und/oder die Konditionierung des Gases für die Membrananlage überdimensioniert ausgelegt, wodurch erhöhte Investition und Betriebskosten anfallen.

In der DE 40 27 600 A1 ist ein Verfahren zur Gewinnung von Stickstoff aus Luft mittels Membranzerlegung beschrieben, bei dem der Sauerstoff der Luft durch Verbrennung mit Kohlenwasserstoffen gebunden wird und das gewonnene Abgas danach der Membrantrenneinheit zugeführt wird. Hierdurch soll ein Verfahren zur Gewinnung von Stickstoff aus Luft geschaffen werden, bei dem mit verringertem Aufwand hohe Reinheit des Produktes und eine verbesserte Gesamteffizienz gegeben ist. Zur Verbrennung der Kohlenwasserstoffe im Ausgangsprodukt wird bevorzugt das Abgas einer Verbrennungskraftmaschine, insbesondere eines Otto- oder Dieselmotors, herangezogen. Die Verbrennungskraftmaschine wird auch gleichzeitig zum Antrieb des Verdichters für die Kompression des zu zerlegenden Gasgemisches herangezogen, wobei der Verdichter das Gasgemisch auf konstanten Druck komprimiert, wodurch die Parameter des Permeatgases bzw. Retentatgases festgelegt sind.

Aus der GB 2 171 984 A ist eine Vorrichtung zur Gas-Trennung bekannt, mit der insbesondere Stickstoff zum Explosionsschutz hergestellt werden kann. Hierzu wird zunächst ein Verbrennungsgas zum Erhalt einer Gasmischung aus Stickstoff, Sauerstoff und Verbrennungsprodukten verbrannt, wobei der Sauerstoffgehalt unter 20 Volumsprozent liegt. Danach wird die Gasmischung gekühlt, komprimiert und danach vorzugsweise über eine semi-permeable Membran getrennt. Hierbei wird die zur Verbrennung der Gasmischung vorgesehene Turbine zum Antrieb des Kompressors verwendet, wobei der Rotor des für die Verdichtung des Gases vorgesehenen Turbokompressors auf derselben Antriebswelle wie der Rotor der den Kompressor antreibenden Turbine gelagert ist. Da die Ausgangsleistung einer Turbine jedoch konstruktiv festgelegt und demzufolge nicht regelbar ist, können die Parameter des Permeatgases bzw. Retentatgases nicht über die Verdichtereinheit gesteuert bzw. geregelt werden.

Das Dokument US-A-5 496 388 betrifft eine Vorrichtung zur Gaspermeation mit einer einer Verdichtereinheit als Druckquelle nachgeschalteten Membraneinheit. Es befasst sich mit der Regelung der Produktzusammensetzung bei gattungsgemäßen Verfahren, wobei vorgeschlagen wird, einen Kompressor mit variabler effektiver Rotorlänge zu verwenden, um die energetischen Nachteile eines Drosselventils *upstream* vom Kompressor zu beheben.

Es ist nun Ziel der Erfindung, eine Vorrichtung und ein Verfahren zur Gaspermeation zu schaffen, bei welcher mit möglichst geringem Energieaufwand verschiedene Parameter (Gaszusammensetzung, Volumenstrom, usw.) des Permeatgases bzw. Retentatgases eingestellt werden können.

Die erfindungsgemäße Vorrichtung der eingangs angeführten Art ist dadurch gekennzeichnet, dass eine an die Produktgas-Ausgangsleitung angeschlossene Sensoreinheit zur Bestimmung eines Gas-Parameters vorgesehen ist, wobei die Sensoreinheit einer Stelleinrichtung zur Regelung der Drehzahl der Verdichtereinheit in Abhängigkeit des Gas-Parameters zugeordnet ist. Durch das Vorsehen einer drehzahlregelbaren Verdichtereinheit, welche direkt die in die Membraneinheit zur Gaspermeation beförderte Gasmenge festlegt, kann der lineare Zusammenhang zwischen der Fördermenge und der Produktgaszusammensetzung, d.h. der Zusammensetzung des Permeatgases bzw. des Retentatgases, ausgenutzt werden und somit energieeffizient und kostengünstig das gewünschte Produktgas hergestellt werden. Bei der bisher-bekannten konstanten Förderleistung des zur Gas-Permeation vorgesehenen Gases musste hingegen je nach der gewünschten Menge an Produktgas überschüssige Energie vernichtet werden.

Durch das Vorsehen einer an die Produktgas-Ausgangsleitung, d.h. die Permeatgas-Ausgangsleitung bzw. die Retentatgas-Ausgangsleitung, angeschlossene Sensoreinheit zur Bestimmung eines Gas-Parameters kann in Abhängigkeit eines bestimmten Gasparameters die erforderliche Leistung der Verdichtereinheit eingestellt werden. Hierdurch kann vorteilhafterweise über einen Regelkreis die Leistung der Verdichtereinheit zum Erhalt des Gases (Permeat- bzw. Retentatgases) mit den gewünschten Gasparametern eingestellt werden.

Für eine einfache Regelung bzw. Steuerung der Leistung der Verdichtereinheit ist es günstig, wenn als Verdichtereinheit ein drehzahlregelbarer Schraubenkompressor vorgesehen ist.

Um die Leistung der Verdichtereinheit in Abhängigkeit einer Gaskonzentration im Retentat- bzw. Permeatgas einzustellen, ist es vorteilhaft, wenn als Sensoreinheit ein Gassensor vorgesehen ist. Insbesondere ist es zur N₂-Produktion aus Umgebungsluft günstig, wenn der Gassensor ein O₂-Sensor ist.

Weiters ist es ebenfalls möglich, die Leistung der Verdichtereinheit in Abhängigkeit von dem gewünschten Retentat- bzw. Permeatgas einzustellen, wenn als Sensoreinheit ein Drucksensor, ein Temperatursensor oder ein Volumenstrom-Sensor vorgesehen ist.

Um das Gas vor der Gaspermeation von Verunreinigungen und Schmutzpartikeln zu reinigen, ist es günstig, wenn in der Gaseingangsleitung zwischen der Druckquelle und der Membraneinheit eine Filtereinheit vorgesehen ist. Weiters ist es günstig, um das Gas vor der Gaspermeation auf eine gewünschte Temperatur vorzunehmen, wenn in der Gaseingangsleitung zwischen der Druckquelle und der Membraneinheit eine Vorwärmeinheit vorgesehen ist. Ebenfalls ist es zur Kondensierung von H₂O vor der Permeation von Vorteil, wenn in der Gaseingangsleitung zwischen der Druckquelle und der Membraneinheit ein Kältetrockner vorgesehen ist, um insbesondere bei der Verwendung von Umgebungsluft das Gas zu trocknen.

Da es bei der Verwendung, beispielsweise von Stickstoff zum Explosionsschutz von Vorteil ist, wenn der Stickstoff einen konstanten Druck aufweist ist es günstig, wenn in der Produktgas-(hier Retentatgas-) Ausgangsleitung ein Druckhalteventil vorgesehen ist.

Um das Produktgas, das üblicherweise an der Gaspermeation einen Druck von ca. 10 - 13 bar aufweist, auch für Hochdruckapplikationen verwenden zu können, ist es günstig, wenn ein Hochdruckverdichter, beispielsweise ein mehrstufiger Kolbenkompressor, an die Produktgas-Ausgangsleitung angeschlossen ist. Durch das Vorsehen eines Hochdruckverdichters kann das Vorsehen eines Druckhalteventils. entfallen, und darüber hinaus der Volumenstrom des Produktgases konstant gehalten werden.

Um die Leistung des der Membraneinheit nachgeschalteten Hochdruckverdichters je nach den gewünschten Erfordernissen anpassen zu können, ist es vorteilhaft, wenn dem Hochdruckverdichter eine weitere, an die Produktgas-Ausgangsleitung angeschlossene Sensoreinheit zugeordnet ist. Da es insbesondere von Bedeutung ist, dass das Produkt(Retentat-)gas beispielsweise zum Explosionsschutz mit einem konstanten Volumenstrom eingebracht wird, ist es günstig, wenn als weitere Sensoreinheit ein Volumenstrom-Sensor vorgesehen ist.

Das Verfahren der eingangs angeführten Art ist dadurch gekennzeichnet, dass die die Membraneinheit durchsetzende Gasmenge direkt mittels einer drehzahlregelbaren Verdichtereinheit linear gesteuert bzw. geregelt wird. Durch die Steuerung bzw. Regelung der drehzahlregelbaren Verdichtereinheit kann je nach der gewünschten Gaskonzentration die Leistung der Verdichtereinheit entsprechend eingestellt werden, und demnach die entsprechende Energie der Verdichtereinheit zugeführt werden, wodurch sich gegenüber bekannten Verfahren zur Gaspermeation ein wesentlich verringerter Energiebedarf und somit effizienterer, kostengünstigerer Betrieb ergibt.

Für eine automatische Einstellung der für das gewünschte Retentat- bzw. Permeatgas notwendigen Leistung der Verdichtereinheit ist es von Vorteil, wenn die Drehzahl der Verdichtereinheit in Abhängigkeit von einem nach der Gaspermeation gemessenen Retentatgas- bzw. Permeatgas-Parameter geregelt wird. Insbesondere ist es für eine Regelung mit einem hohen Wirkungsgrad günstig, wenn die Drehzahl der Verdichtereinheit elektronisch geregelt wird.

Für eine einfache und kostengünstige Herstellung von Stickstoff ist es vorteilhaft, wenn Umgebungsluft von der drehzahlregelbaren Verdichtereinheit verdichtet wird.

Für eine einfache Regelung der Gaszusammensetzung ist es günstig, wenn der O₂-Gehalt im Produktgas nach der Gaspermeation als Gas-Parameter verwendet wird. Da insbesondere bei der Verwendung von Stickstoff beim Explosionsschutz starke Schwankungen der Stickstoffkonzentration ein erhöhtes Risiko mit sich bringen, wird vorteilhafterweise der N₂-Gehalt im Produktgas konstant gehalten. Für bestimmte Anwendungszwecke kann es ebenfalls von Vorteil sein, wenn der Druck des Produktgases konstant gehalten wird.

Um Schwankungen der Lieferleistung an Produktgas zu vermeiden, ist es von Vorteil, wenn der Volumenstrom des Produktgases mittels einer weiteren Verdichtereinheit konstant gehalten wird. Um mit Hilfe der weiteren Verdichtereinheit, die insbesondere ein Hochdruckverdichter, beispielsweise ein mehrstufiger Kolbenkompressor sein kann, eine konstante Lieferleistung an Produktgas zu erreichen, ist es von Vorteil, wenn die weitere Verdichtereinheit in Abhängigkeit von dem Volumenstrom des Produktgases gesteuert wird.

Um in dem Gas vorhandenes H₂O zu entfernen, ist es günstig, wenn das Gas vor der Gaspermeation getrocknet wird. Weiters ist es für eine Erhöhung der Reinheit des zur Permeation vorgesehenen Gases von Vorteil, wenn das Gas vor der Gaspermeation gefiltert wird.

In Abhängigkeit von der Umgebungstemperatur kann für eine zuverlässige Gaspermeation von Vorteil sein, wenn das Gas vor der Gaspermeation erwärmt wird.

Die Erfindung wird nachstehend anhand von in der Zeichnung dargestellten bevorzugten Ausführungsbeispielen, auf die sie jedoch nicht beschränkt sein soll, noch weiter erläutert. Im Einzelnen zeigen in der Zeichnung:
Fig. 1 ein Schema einer Vorrichtung bzw. eines Verfahrens zur Gaspermeation mit einem über einen O₂-Sensor gesteuerten Regelkreis mit einem Druckhalteventil und
Fig. 2 ein Schema einer Vorrichtung bzw. eines Verfahrens ähnlich Fig. 1, jedoch mit einem Hochdruckverdichter nach der Gaspermeation.

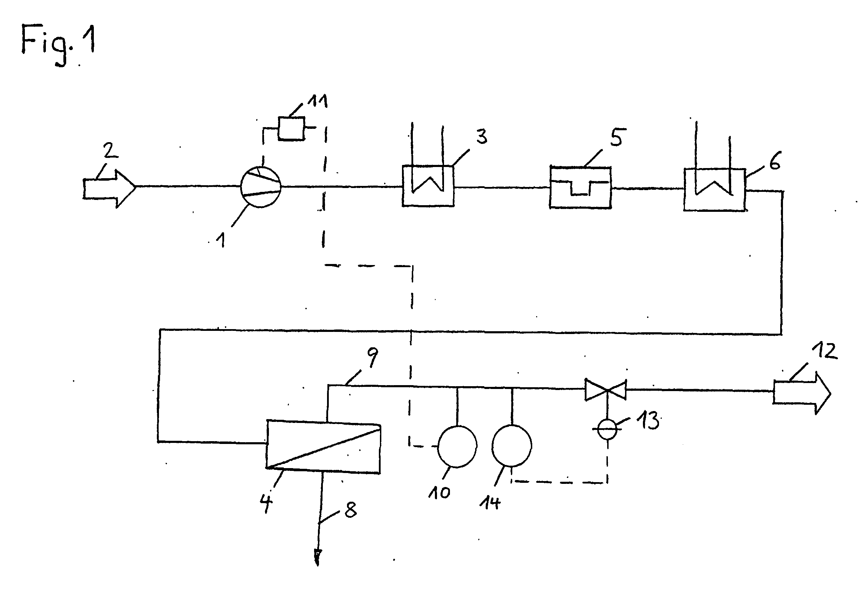

In Fig. 1 ist schematisch ein Niederdruckkompressor 1, beispielsweise ein Schraubenkompressor gezeigt, der aus der Umgebung Luft 2 ansaugt. Die Umgebungsluft wird von dem Kompressor 1 durch einen Kältetrockner 3 zur Abscheidung von Wasser gefördert. Danach sind vor der Membraneinheit 4 noch eine Filtereinheit 5 und eine Wärmetauscher 6 zur Reinigung bzw. Erwärmung/Kühlung der zur Gaspermeation vorgesehenen Luft angebracht. Nachdem die Luft über die Gaseingangsleitung 7 in die Membraneinheit 4 gefördert worden ist, wird ein über die Permeat-Ausgangsleitung 8 abgefördertes Permeatgas, welches aus O₂-angereicherter Luft besteht, abgefördert.

Bei dem über die Retentatgas-Ausgangsleitung 9 geförderten N₂-angereicherten Retentatgas wird der O₂-Gehalt mit Hilfe eines O₂-Sensors 10 gemessen, und die Drehzahl des Kompressors 1 in Abhängigkeit von der O₂-Konzentration über eine Stelleinrichtung 11 geregelt, um das Retentatgas an der Austrittsstelle 12 mit einer gewünschten O₂- bzw. N₂-Konzentration zu entnehmen. Der eingestellte O₂-bzw. N₂-Wert wird als Sollwert für den Regelkreis Flowmessung 14/Druckhalteventil 13 vorgegeben.

Somit kann die gewünschte wählbare N₂-Konzentration durch Messung des O₂-Gehaltes im Retentatgas realisiert werden, indem die Drehzahl des Verdichters 1 geregelt wird. Hierbei handelt es sich um eine inverse Regelung, bei welcher die Drehzahl des Verdichters 1 erhöht wird, wenn der gemessene O₂-Gehalt ansteigt. Durch die Drehzahlerhöhung wird der Förderungsdruck für die Membraneinheit 4 erhöht, womit die Abtrennleistung in Bezug auf O₂ steigt.

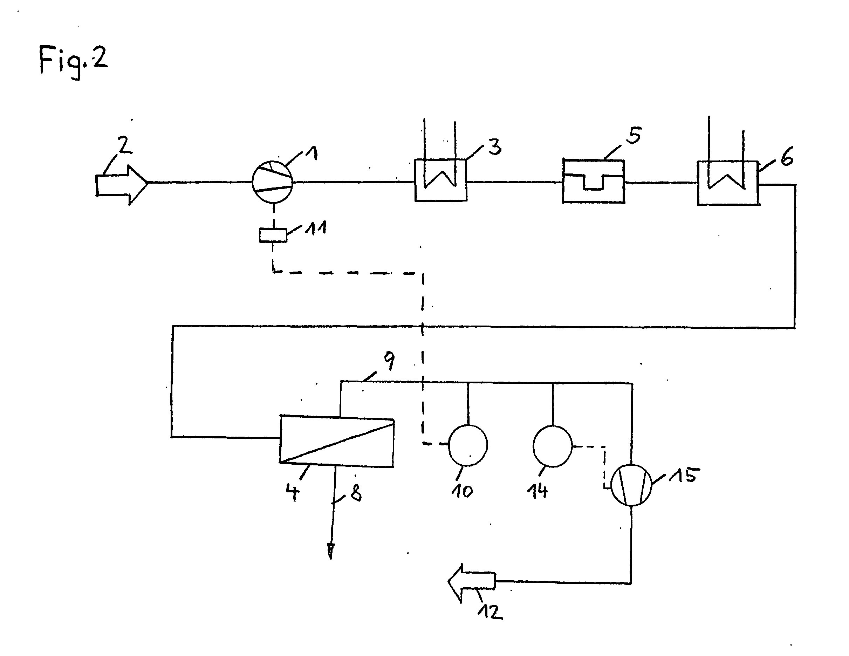

In Fig. 2 ist ein Schema ähnlich Fig. 1 dargestellt, wobei nach der Membraneinheit 4 ein Hochdruckverdichter 15, beispielsweise ein mehrstufiger Kolbenkompressor, vorgesehen ist. Mit Hilfe des Hochdruckverdichters kann der Lieferdruck des N₂-angereicherten Retentatgases üblicherweise auf 150 bis 200 bar erhöht werden.

Die O₂-Regelung wird gemäß dem in Fig. 1 dargestellten Ausführungsbeispiel über die von dem O₂-Sensor 10 gemessene Restkonzentration im Retentatgas geregelt. Die geforderte Hochdrucklieferleistung wird durch Regelung der Drehzahl des Hochdruckverdichters 15 erreicht. Hierdurch kann ein variierender Druck des Retentatgases und somit ein schwankender Volumenstrom an Retentatgas mit Hilfe des Hochdruckverdichters 15 wettgemacht werden.

Somit ist es möglich einen zeitlich konstanten Volumenstrom eines Retentatgases mit gewünschter N₂-Konzentration unter Ausgleich der Druck- bzw. Temperaturschwankungen der Ausgängsluft sowie von Alterungserscheinungen der Membraneinheit 4 zu erzielen.

Die Regelung mit Hilfe des Sensors 10 und des Stellglieds 11 kann gegebenenfalls auch entfallen, und die Drehzahl des Verdichters 1 in Abhängigkeit von der gewünschten bzw. gemessenen Gaszusammensetzung manuell eingestellt werden.

## Patentansprüche

1. Vorrichtung zur Gaspermeation mit mindestens einer, einer drehzahlregelbaren Verdichtereinheit (1) als Druckquelle nachgeschalteten, zur Gaspermeation vorgesehenen Membraneinheit (4) mit einer Gas-Eingangsleitung (7) und einer Produktgas-Ausgangsleitung (8, 9), wobei eine an die Produktgas-Ausgangsleitung (8, 9) angeschlossene Sensoreinheit (10) zur Bestimmung eines Gas-Parameters vorgesehen ist, wobei die Sensoreinheit (10) einer Stelleinrichtung (11) zur Regelung der Drehzahl der Verdichtereinheit (1) in Abhängigkeit des Gas-Parameters zugeordnet ist.

2. Vorrichtung nach Anspruch 1, **dadurch gekennzeichnet, dass** als Verdichtereinheit (1) ein drehzahlregelbarer Schraubenkompressor vorgesehen ist.

3. Vorrichtung nach Anspruch 1 oder 2, **dadurch gekennzeichnet, dass** als Sensoreinheit (10) ein Gassensor vorgesehen ist.

4. Vorrichtung nach Anspruch.3, **dadurch gekennzeichnet, dass** der Gassensor ein O₂-Sensor ist.

5. Vorrichtung nach Anspruch 1 oder 2, **dadurch gekennzeichnet, dass** als Sensoreinheit (10) ein Drucksensor vorgesehen ist.

6. Vorrichtung nach Anspruch 1 oder 2, **dadurch gekennzeichnet, dass** als Sensoreinheit (10) ein Temperatursensor vorgesehen ist.

7. Vorrichtung nach Anspruch 1 oder 2, **dadurch gekennzeichnet, dass** als Sensoreinheit (10) ein Volumenstrom-Sensor vorgesehen ist.

8. Vorrichtung nach einem der Ansprüche 1 bis 7, **dadurch gekennzeichnet, dass** in der Gaseingangsleitung (7) zwischen der Druckquelle (1) und der Membraneinheit (4) eine Filtereinheit (5) vorgesehen ist.

9. Vorrichtung nach einem der Ansprüche 1 bis 8, **dadurch gekennzeichnet, dass** in der Gaseingangsleitung (7) zwischen der Druckquelle (1) und der Membraneinheit (4) eine Vorwärmeinheit (6) vorgesehen ist.

10. Vorrichtung nach einem der Ansprüche 1 bis 9, **dadurch gekennzeichnet, dass** in der Gaseingangsleitung (7) zwischen der Druckquelle (1) und der Membraneinheit (4) ein Kältetrockner (3) vorgesehen ist.

11. Vorrichtung nach einem der Ansprüche 1 bis 10, **dadurch gekennzeichnet, dass** in der Produktgas-Ausgangsleitung (8, 9) ein Druckhalteventil (13) vorgesehen ist.

12. Vorrichtung nach einem der Ansprüche 1 bis 10, **dadurch gekennzeichnet, dass** ein Hochdruckverdichter (15), beispielsweise ein mehrstufiger Kolbenkompressor, an die Produktgas-Ausgangsleitung (8, 9) angeschlossen ist.

13. Vorrichtung nach Anspruch 12, **dadurch gekennzeichnet, dass** dem Hochdruckverdichter (15) eine weitere, an die Produktgas-Ausgangsleitung (8, 9) angeschlossene Sensoreinheit (14) zugeordnet ist.

14. Vorrichtung nach Anspruch 13, **dadurch gekennzeichnet, dass** als weitere Sensoreinheit (14) ein Volumenstrom-Sensor vorgesehen ist.

15. Verfahren zur Steuerung bzw. Regelung einer Gaspermeation mit mindestens einer, einer Druckquelle nachgeschalteten, zur Gaspermeation vorgesehenen Membraneinheit (4), wobei die die Membraneinheit (4) durchsetzende Gasmenge direkt mittels einer drehzahlregelbaren Verdichtereinheit (1) linear gesteuert bzw. geregelt wird.

16. Verfahren nach Anspruch 15, **dadurch gekennzeichnet, dass** die Drehzahl der Verdichtereinheit (1) in Abhängigkeit von einem nach der Gaspermeation gemessenen Retentatgas- bzw. Permeatgas-Parameter geregelt wird.

17. Verfahren nach Anspruch 15 oder 16, **dadurch gekennzeichnet, dass** die Drehzahl der Verdichtereinheit (1) elektronisch geregelt wird.

18. Verfahren nach einem der Ansprüche 15 bis 17, **dadurch gekennzeichnet, dass** Umgebungsluft von der drehzahlregelbaren Verdichtereinheit (1) verdichtet wird.

19. Verfahren nach einem der Ansprüche 15 bis 18, **dadurch gekennzeichnet, dass** der O₂-Gehalt im Produktgas nach der Gaspermeation als Gas-Parameter verwendet wird.

20. Verfahren nach einem der Ansprüche 15 bis 19, **dadurch gekennzeichnet, dass** der N₂-Gehalt im Produktgas konstant gehalten wird.

21. Verfahren nach einem der Ansprüche 15 bis 20, **dadurch gekennzeichnet, dass** der Druck des Produktgases konstant gehalten wird.

22. Verfahren nach einem der Ansprüche 15 bis 21, **dadurch gekennzeichnet, dass** der Volumenstrom des Produktgases mittels einer weiteren Verdichtereinheit (15) konstant gehalten wird.

23. Verfahren nach Anspruch 22, **dadurch gekennzeichnet, dass** die weitere Verdichtereinheit (15) in Abhängigkeit von dem Volumenstrom des Produktgases gesteuert wird.

24. Verfahren nach einem der Ansprüche 15 bis 23, **dadurch gekennzeichnet, dass** das Gas vor der Gaspermeation getrocknet wird.

25. Verfahren nach einem der Ansprüche 15 bis 24, **dadurch gekennzeichnet, dass** das Gas vor der Gaspermeation gefiltert wird.

26. Verfahren nach einem der Ansprüche 15 bis 25, **dadurch gekennzeichnet, dass** das Gas vor der Gaspermeation erwärmt wird.

## Claims

1. A device for gas permeation comprising at least one membrane unit (4) provided for gas permeation, having a gas inlet duct (7) and a product gas outlet duct (8, 9) and arranged to follow an rpm-adjustable compressor unit (1) provided as pressure source, wherein a sensor unit (10) connected to the product gas outlet duct (8, 9) is provided for determining a gas parameter, and wherein the sensor unit (10) is associated with an adjustment means (11) for adjusting the rpm of the compressor unit (1) in dependence on the gas parameter.

2. A device according to claim 1, **characterised in that** an rpm-adjustable screw-type compressor is provided as the compressor unit (1).

3. A device according to claim 1 or 2, **characterised in that** a gas sensor is provided as the sensor unit (10).

4. A device according to claim 3, **characterised in that** the gas sensor is an O₂ sensor.

5. A device according to claim 1 or 2, **characterised in that** a pressure sensor is provided as the sensor unit (10).

6. A device according to claim 1 or 2, **characterised in that** a temperature sensor is provided as the sensor unit (10).

7. A device according to claim 1 or 2, **characterised in that** a volume flow sensor is provided as the sensor unit (10).

8. A device according to any one of claims 1 to 7, **characterised in that** a filtering unit (5) is provided in the gas inlet duct (7) between the pressure source (1) and the membrane unit (4).

9. A device according to any one of claims 1 to 8, **characterised in that** a pre-heating unit (6) is provided in the gas inlet duct (7) between the pressure source (1) and the membrane unit (4).

10. A device according to any one of claims 1 to 9, **characterised in that** a freeze dryer (3) is provided in the gas inlet duct (7) between the pressure source (1) and the membrane unit (4).

11. A device according to any one of claims 1 to 10, **characterised in that** a pressure maintaining valve (13) is provided in the product gas outlet duct (8, 9).

12. A device according to any one of claims 1 to 10, **characterised in that** a high pressure compressor (15), e.g. a multistage piston compressor, is connected to the product gas outlet duct (8, 9).

13. A device according to claim 12, **characterised in that** the high pressure compressor (15) has an associated further sensor unit (14) connected to the product gas outlet duct (8, 9).

14. A device according to claim 13, **characterised in that** a volume flow sensor is provided as the further sensor unit (14).

15. A method for controlling or adjusting, respectively, a gas permeation with at least one membrane unit (4) provided for gas permeation and arranged to follow a pressure source, wherein the amount of gas passing the membrane unit (4) is directly linearly controlled or adjusted, respectively, by means of an rpm-adjustable compressor unit (1).

16. A method according to claim 15, **characterised in that** the rpm of the compressor unit (1) is adjusted in dependence on a retentate gas or permeate gas parameter, respectively, measured upon gas permeation.

17. A method according to claim 15 or 16, **characterised in that** the rpm of the compressor unit (1) are electronically controlled.

18. A method according to any one of claims 15 to 17, **characterised in that** ambient air is compressed by the rpm-adjustable compressor unit (1).

19. A method according to any one of claims 15 to 18, **characterised in that** the O₂ content in the product gas after gas permeation is used as gas parameter.

20. A method according to any one of claims 15 to 19, **characterised in that** the N₂ content in the product gas is kept constant.

21. A method according to any one of claims 15 to 20, **characterised in that** the pressure of the product gas is kept constant.

22. A method according to any one of claims 15 to 21, **characterised in that** the volume flow of the product gas is kept constant by means of a further compressor unit (15).

23. A method according to claim 22, **characterised in that** the further compressor unit (15) is controlled in dependence on the volume flow of the product gas.

24. A method according to any one of claims 15 to 23, **characterised in that** the gas is dried prior to the gas permeation.

25. A method according to any one of claims 15 to 24, **characterised in that** the gas is filtered prior to the gas permeation.

26. A method according to any one of claims 15 to 25, **characterised in that** the gas is heated prior to the gas permeation.

## Revendications

1. Dispositif pour la perméation de gaz avec au moins une unité à membrane (4) prévue pour la perméation de gaz, branchée en aval d'une unité de compresseur (1) à vitesse réglable comme source de pression, avec une conduite d'entrée de gaz (7) et une conduite de sortie de gaz produit (8, 9), où une unité de capteur (10) raccordée à la conduite de sortie de gaz produit (8, 9) pour la détermination d'un paramètre de gaz est prévue, où l'unité de capteur (10) est associée à une unité de réglage (11) pour la régulation de la vitesse de rotation de l'unité de compresseur (1) en fonction du paramètre de gaz.

2. Dispositif selon la revendication 1, **caractérisé en ce qu'**un compresseur à vis à vitesse de rotation réglable est prévu comme unité de compresseur (1).

3. Dispositif selon la revendication 1 ou 2, **caractérisé en ce qu'**un capteur de gaz est prévu comme unité de capteur (10).

4. Dispositif selon la revendication 3, **caractérisé en ce que** le capteur de gaz est un capteur de O₂.

5. Dispositif selon la revendication 1 ou 2, **caractérisé en ce qu'**un capteur de pression est prévu comme unité de capteur (10).

6. Dispositif selon la revendication 1 ou 2, **caractérisé en ce qu'**un capteur de température est prévu comme unité de capteur (10).

7. Dispositif selon la revendication 1 ou 2, **caractérisé en ce qu'**un capteur de courant volumique est prévu comme unité de capteur (10).

8. Dispositif selon l'une des revendications 1 à 7, **caractérisé en ce qu'**une unité de filtre (5) est prévue dans la conduite d'entrée de gaz (7) entre la source de pression (1) et l'unité à membrane (4).

9. Dispositif selon l'une des revendications 1 à 8, **caractérisé en ce qu'**une unité de préchauffage (6) est prévue dans la conduite d'entrée de gaz (7) entre la source de pression (1) et l'unité à membrane (4).

10. Dispositif selon l'une des revendications 1 à 9, **caractérisé en ce qu'**un sécheur réfrigérant (3) est prévu dans la conduite d'entrée de gaz (7) entre la source de pression (1) et l'unité à membrane (4).

11. Dispositif selon l'une des revendications 1 à 10, **caractérisé en ce qu'**une vanne de maintien de la pression (13) est prévue dans la conduite de sortie de gaz produit (8, 9).

12. Dispositif selon l'une des revendions 1 à 10, **caractérisé en ce qu'**un compresseur haute pression (15), par exemple un compresseur à piston à plusieurs étages, est raccordé à la conduite de sortie de gaz produit (8, 9).

13. Dispositif selon la revendication 12, **caractérisé en ce qu'**une unité de capteur supplémentaire (14), raccordée à la conduite de sortie de gaz produit (8, 9), est associée au compresseur haute pression (15).

14. Dispositif selon la revendication 13, **caractérisé en ce qu'**un capteur de courant volumique est prévu comme unité de capteur supplémentaire (14).

15. Procédé pour la commande ou la régulation d'une perméation de gaz avec au moins une unité à membrane (4) prévue pour la perméation de gaz, branchée en aval de la source de pression, où la quantité de gaz traversant l'unité à membrane (4) est commandée linéairement ou régulée directement au moyen d'une unité de compresseur (1) à vitesse de rotation réglable.

16. Procédé selon la revendication 15, **caractérisé en ce que** la vitesse de rotation de l'unité de compresseur (1) est régulée en fonction d'un paramètre de gaz de rétentat ou de gaz de perméat mesuré après la perméation de gaz.

17. Procédé selon la revendication 15 ou 16, **caractérisé en ce que** la vitesse de rotation de l'unité de compresseur (1) est régulée électroniquement.

18. Procédé selon l'une des revendications 15 à 17, **caractérisé en ce que** de l'air ambiant est comprimé par l'unité de compresseur (1) à vitesse de rotation réglable.

19. Procédé selon l'une des revendications 15 à 18, **caractérisé en ce que** la teneur en O₂ du gaz produit est utilisée comme paramètre de gaz après la perméation de gaz.

20. Procédé selon l'une des revendications 15 à 19, **caractérisé en ce que** la teneur en N₂ du gaz produit est maintenue constante.

21. Procédé selon l'une des revendications 15 à 20, **caractérisé en ce que** la pression du gaz produit est maintenue constante.

22. Procédé selon l'une des revendications 15 à 21, **caractérisé en ce que** le courant volumique du gaz produit est maintenu constant au moyen d'une unité de compresseur supplémentaire (15).

23. Procédé selon la revendication 22, **caractérisé en ce que** l'unité de compresseur supplémentaire (15) est commandée en fonction du courant volumique du gaz produit.

24. Procédé selon l'une des revendications 15 à 23, **caractérisé en ce que** le gaz est séché avant la perméation de gaz.

25. Procédé selon l'une des revendications 15 à 24, **caractérisé en ce que** le gaz est filtré avant la perméation de gaz.

26. Procédé selon l'une des revendications 15 à 25, **caractérisé en ce que** le gaz est chauffé avant la perméatlon de gaz.
